# EUROPEAN PATENT APPLICATION

(11) **EP 2 357 327 A1**
(43) Date of publication of application: **17.08.2011**
(21) Application number: 09827501.9
(22) Date of filing: 11.11.2009
(51) Int. Cl.: F01L 9/02

(54) **VARIABLE VALVE GEAR AND METHOD OF CONTROLLING SAME**

(30) Priority: 20.11.2008 JP 2008297229
(71) Applicant: Komatsu Ltd., Minato-ku Tokyo 107-8414 (JP)
(72) Inventor: SATO, Etsuro, Hiratsuka-shi Kanagawa 254-8567 (JP); TACHIBANA, Hideaki, Hiratsuka-shi Kanagawa 254-8567 (JP); HISADA, Youhei, Oyama-shi Tochigi 323-8558 (JP); OHTA, Kazuo, Hiratsuka-shi Kanagawa 254-8567 (JP)
(74) Representative: Goddar, Heinz J.
(86) International application number: PCT/JP2009/069164
(87) International publication number: WO 2010/058720

(57) **Abstract**

A variable valve device and a method of controlling the variable valve device, wherein, in order to prevent a shortage of oil film in a spool section, only the spool of a solenoid on/off valve is moved at a timing not affecting operation of an air intake valve, to thereby stabilize operation of the solenoid on/off valve. A variable valve device comprises: a hydraulic actuator provided with a valve actuation mechanism for moving an air intake valve to open or close an air intake port and also with a piston rod section for preventing the air intake valve from moving; a hydraulic control valve for controlling an operating oil supplied to or discharged from the hydraulic actuator, the hydraulic control valve having a spool and a slide surface on which the spool slides, the spool being configured so as to move between a prevented position at which the moving of the piston rod section of the hydraulic actuator is prevented and a released position at which the moving of the piston rod section is not prevented; and a means for performing a control valve stabilizing control for sliding the spool of the hydraulic control valve during a period where the air intake port is being fully closed by the air intake valve, and the means also performing a variable valve control for sliding, after the control valve stabilizing control is performed and while the air intake valve is being engaged in closing movement, the spool to the prevented side to prevent the moving of the piston rod section, stopping the closing movement of the air intake valve to thereby change a timing at which the air intake port is fully closed.

## Description

### TECHNICAL FIELD

The present invention relates to a variable valve device and a method of controlling the variable valve device.

### BACKGROUND ART

As an engine to be mounted on a vehicle, there has been an engine that is provided with a variable valve device for adjusting an air-intake or exhaust volume by controlling an open/close timing for the air intake valve and the exhaust valve according to operating conditions of the engine.

There has been such a variable valve device that uses an electric motor or a hydraulic pressure. In a hydraulic variable valve device that is driven by hydraulic pressure, there has been one in which a variable valve is operated by controlling a flow of operating oil.

For example, there has been a variable valve device in which a directional control valve blocks at a prescribed timing an outflow of fluid from a hydraulic actuator whose operation follows a rocker arm, so that the hydraulic actuator stops its operation and acts on the rocker arm, to thereby keep the open state of the air intake valve. In this variable valve device driven by hydraulic pressure, a part of a lubrication unit that is attached to the engine is utilized as a source of fluid, and a low-pressured oil is supplied into the directional control valve. Therefore, there may be a case in which a piston of the hydraulic actuator cannot follow a high-speed open/close action of the air intake valve when the engine operates at a high speed. As a result, there was a problem that the piston of the hydraulic actuator cannot arrive at a desired position and therefore the open state of the air intake valve cannot be kept with a desired degree of opening.

As a technique to solve such a problem, Patent document 1 discloses a technique for an engine valve device that can operate in a variable manner by utilizing a part of a lubrication unit attached to the engine as a source of a pressurized oil, and yet is capable of following a high-speed operation of the engine and allowing the air intake valve to be in the open state with a desired degree of opening accurately

### PRIOR ART DOCUMENTS

### PATENT DOCUMENT

Patent document 1: W02008-001699

### DISCLOSURE OF THE INVENTION

### PROBLEMS TO BE SOLVED BY THE INVENTION

A solenoid on/off valve disclosed in the Patent document 1 is constituted by a solenoid, a spool section comprising a spool, a spring, etc. In a normal state (a state in which the solenoid is not excited, hereinafter called OFF state), the spool moves in a pressing direction of the spring, causing the solenoid on/off valve to be in an open state. When the solenoid is excited (hereinafter called ON state), the spool moves against a biasing force of the spring, causing the solenoid on/off valve to be in a close state.

However, in the solenoid on/off valve disclosed in the Patent document 1, when the OFF state continues, a shortage of oil film occurs in the spool section of the solenoid on/off valve. As a result, there may be a case in which an initial operation is unstable.

Specifically, after the OFF state of the solenoid on/off valve had continued and at the first on/off operation of the solenoid on/off valve, if the oil film is short in the spool section, then the spool in the spool portion cannot move smoothly. Particularly, a return of the spool is delayed (slow) in the OFF state, and timing to fully close the air intake valve varies greatly. As a result, compression ratio changes and imperfect combustion might occur.

Further, when a return of the spool is slow (delayed), and timing to fully close the air intake valve is delayed, collision might occur between the air intake valve and the piston of the engine.

The present invention has been made in view of the above problem, and an object of the invention is to provide a variable valve device and a method of controlling the variable valve device, wherein, in order to prevent a shortage of oil film in a spool section, only the spool of a solenoid on/offvalve is moved at a timing not affecting operation of an air intake valve, to thereby stabilize operation of the solenoid on/off valve.

### MEASURES TO SOLVE THE PROBLEMS

To achieve the above object, a variable valve device according to the first invention, comprises: a valve actuation mechanism for moving an air intake valve of an engine to open or close an air intake port; a hydraulic actuator provided with a piston rod section for preventing the air intake valve from moving; a hydraulic control valve for controlling an operating oil supplied to or discharged from the hydraulic actuator, the hydraulic control valve having a spool and a slide surface on which the spool slides, the spool being configured so as to move between a prevented position at which the moving of the piston rod section of the hydraulic actuator is prevented and a released position at which the moving of the piston rod section is not prevented; valve stabilizing control means for performing a control valve stabilizing control for sliding the spool of the hydraulic control valve during a period where the valve actuation mechanism causes the air intake valve to fully close the air intake port; and variable valve control means for performing a variable valve control for sliding, while the air intake valve is being engaged in closing movement, the spool to the prevented side to prevent the moving of the piston rod section, stopping the closing movement of the air intake valve to thereby change a timing at which the air intake port is fully closed.

Further, according to the second invention, the valve stabilizing control means, in the first invention, sets a period of time during which the spool is kept on the prevented side according to a rotation speed of the engine so that the period of time becomes longer as the engine rotation speed becomes lower.

Further, according to the third invention, the valve stabilizing control means, in the first or second invention, sequentially performs the control valve stabilizing control for cylinders of the engine in an order corresponding to a firing order of the cylinders.

Further, according to the fourth invention, the variable valve device further comprises, in any of the first through third inventions, control means for performing the variable valve control and the control valve stabilizing control in combination, the control means allowing the valve stabilizing control means to perform the control valve stabilizing control during a period where the variable valve control is not performed.

Further, according to the fifth invention, the variable valve device further comprises, in any of the first through third inventions, control means for performing the variable valve control and the control valve stabilizing control in combination, the control means, in performing the variable valve control, allowing the variable valve control means to perform the variable valve control after the valve stabilizing control means performs the control valve stabilizing control.

Further, according to the sixth invention, a method of controlling a variable valve device, wherein an air intake valve of an engine is moved by a valve actuation mechanism to open or close an air intake port; the air intake valve is prevented from moving by a piston rod section of a hydraulic actuator; a spool of the hydraulic control valve for controlling an operating oil to be supplied to or discharged from the hydraulic actuator is caused to move between a prevented position at which the moving of the piston rod section of the hydraulic actuator is prevented and a released position at which the moving of the piston rod section is not prevented, so as to control an operation of the piston rod section of the hydraulic actuator, to thereby change a timing at which the air intake port is fully closed, characterized in that the method comprises: performing a control valve stabilizing control for sliding the spool of the hydraulic control valve between the released position and the prevented position during a period where the valve actuation mechanism causes the air intake valve to fully close the air intake port; and performing a variable valve control for sliding, while the air intake valve is being engaged in closing movement, the spool of the hydraulic control valve to the prevented side to prevent the moving of the piston rod section, stopping the closing movement of the air intake valve to thereby change a timing at which the air intake port is fully closed.

Further, according to the seventh invention, the control valve stabilizing control, in the sixth invention, sets a period of time during which the spool is kept on the prevented side according to a rotation speed of the engine so that the period of time becomes longer as the engine rotation speed becomes lower.

Further, according to the eighth invention, the control valve stabilizing control, in the sixth or seventh invention, is sequentially performed for cylinders of the engine in an order corresponding to a firing order of the cylinders.

Further, according to the ninth invention, in any of the sixth through eighth inventions, the variable valve control and the control valve stabilizing control are performed in combination, the control valve stabilizing control being performed during a period where the variable valve control is not performed.

Further, according to the tenth invention, the variable valve control and the control valve stabilizing control are performed in combination, and, in performing the variable valve control, the variable valve control is performed after the control valve stabilizing control is performed.

### (Advantageous Effect of the Invention)

According to the first and sixth inventions, the variable valve control is performed after the control valve stabilizing control for sliding the spool of the hydraulic control valve is performed during a period where the air intake valve fully closes the air intake port, allowing the spool of the hydraulic control valve to be smoothly slidable on the slide surface. Thus, delay in the sliding operation of the spool when the variable valve control is being performed can be prevented, and therefore variation in timing for the air intake valve to close due to the delayed operation of the spool can be suppressed.

Further, according to the second and seventh inventions, the control valve stabilizing control changes a period of time during which the spool is kept on the prevented side so that an oil film may be formed on the slide surface of the hydraulic control valve according to the rotation speed of the engine, and therefore, the spool of the hydraulic control valve can be in a smoothly slidable state on the slide surface regardless of the rotation speed of the engine. Thus, the delay in the sliding operation of the spool of the hydraulic control valve to be performed thereafter can be prevented, and therefore variation in timing for the air intake valve to close due to the delayed operation of the spool can be prevented.

Further, according to the third and eighth inventions, the control valve stabilizing control is sequentially performed for cylinders of the engine in an order corresponding to a firing order of the cylinders. Thus, the delay in the sliding operation of the spool when the variable valve control is being performed can be prevented for each of the cylinders, and therefore variation in timing for the air intake valve to close due to the delayed operation of the spool can be suppressed.

Further, according to the fourth and ninth inventions, the variable valve control and the control valve stabilizing control are performed in combination, and the control valve stabilizing control is performed during a period where the variable valve control is not performed. Thus, the valve stabilizing control is performed at a timing not affecting operation of an air intake valve by the variable valve control.

Further, according to the fifth and tenth inventions, the variable valve control and the control valve stabilizing control are combined, and in performing the variable valve control, the variable valve control is performed after the control valve stabilizing control is performed. Thus, the delay in the sliding operation of the spool when the variable valve control is being performed can be prevented more reliably and therefore variation in timing for the air intake valve to close due to the delayed operation of the spool can be suppressed more reliably.

Further, according to the first through tenth inventions, the operation of the spool is controlled with a high degree of accuracy. Thus, imperfect combustion and collision between the air intake valve and the piston of the engine due to the variation in timing for the air intake valve to close can be avoided.

### BEST MODE FOR CARRYING OUT THE INVENTION

An embodiment of a variable valve device and a method of controlling the variable valve device according to the present invention will be described in detail below in reference to the accompanying drawings.

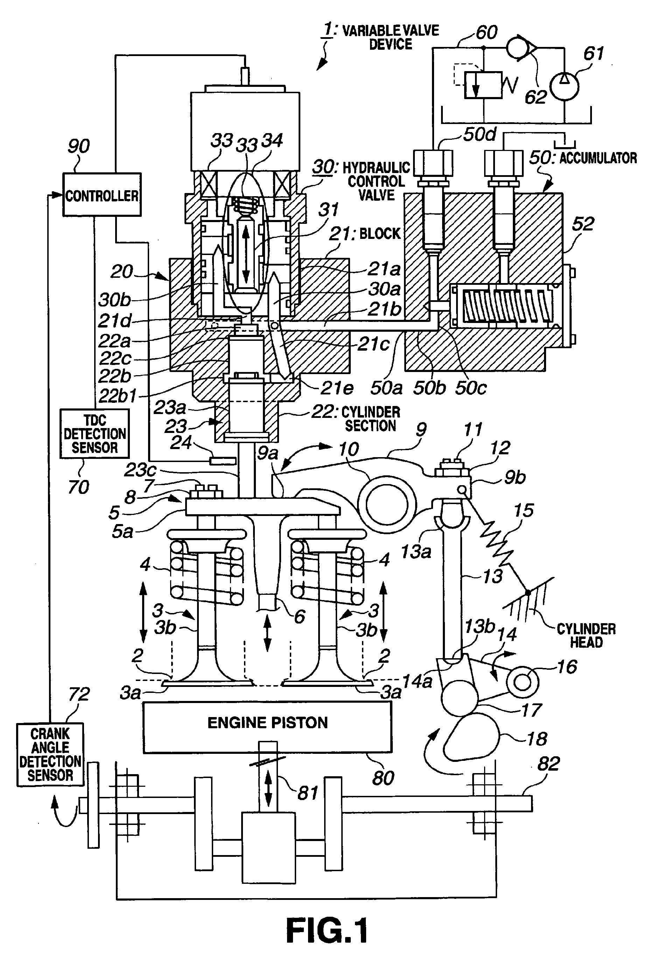

Fig. 1 a schematic diagram illustrating a variable valve device 1 according to the present invention. Although it is supposed in this embodiment that the variable valve device 1 is applied to a four-cycle diesel engine, and description of this embodiment will be made accordingly, a variable valve device according to the present invention is not limited to this embodiment.

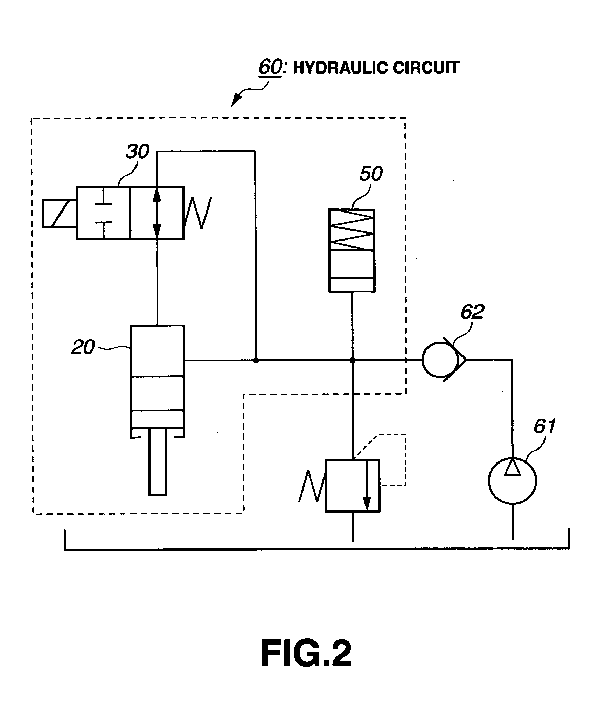

Referring to Fig. 1, the variable valve device 1 comprises a variable valve device controlling controller (hereinafter simply called "controller") 90, a gap sensor 24, TDC (Top Dead Center) detection sensor 70, a crank angle detection sensor 72, a hydraulic actuator 20 constituting a hydraulic circuit 60 described later (see Fig. 2), a hydraulic control valve 30, an accumulator 50 and a diesel engine section.

The controller 90 carries out controls according to the present invention based on results of measurement on various types of signals by the aforementioned various types of sensors.

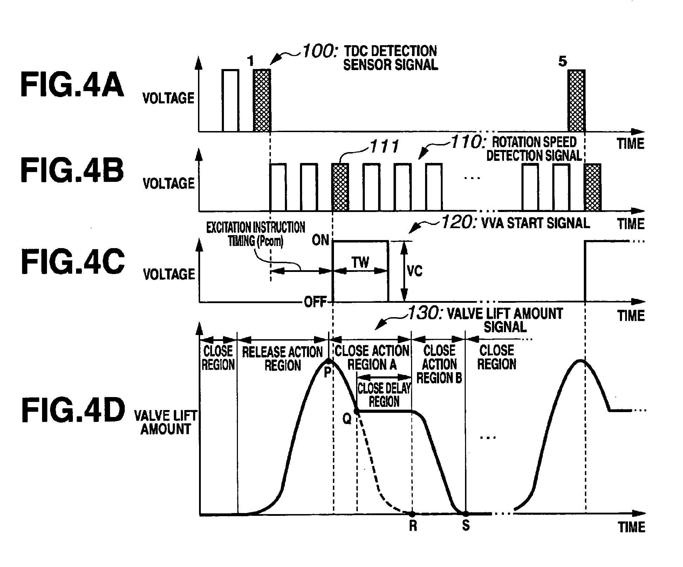

The gap sensor 24 is connected to the controller 90, and arranged on the side of a rod section 23c of a piston 23 described later. The gap sensor 24 measures a gap between the rod section 23c and the gap sensor 24, and outputs the measured signal, i.e., a valve lift amount signal (see Fig. 4(d)) to the controller 90.

The TDC detection sensor 70 is connected to the controller 90, detects that an engine piston 80 in an intake stroke is positioned at the top dead center for each cylinder of the diesel engine section, and outputs a TDC detection sensor signal (see Fig. 4(a)) to the controller 90.

The crank angle detection sensor 72 measures a rotation angle of a crank shaft 82 of the diesel engine section (hereinafter called "crank angle"), and output the measured signal, i.e., a rotation speed detection signal (see Fig. 4(b)) to the controller 90.

Specifically, the rotation speed detection signal is a pulse signal to be output each time the crank angle is at prescribed rotation angles of, for example, 0 degree, 30 degree, 60 degree,..., 360 degree,... and so forth.

The diesel engine section includes a cylinder block and a cylinder head. The cylinder block is provided with cylinders (not shown in the drawings) of a cylindrical shape in which the engine piston 80 is allowed to slide in up and down directions. Also, the cylinder head is provided with a pair of air intake ports 2 and a pair of exhaust ports not shown in the drawings, communicating with outside of the cylinder.

At the pair of the air intake ports 2 are arranged respective air intake valves 3 that move so that the air intake ports are closed or released (up and down directions in Fig. 1). Also, at the pair of the exhaust ports are arranged respective exhaust valves (not shown in the drawings) that move so that the exhaust ports are closed or released.

Each of the air intake valves 3 and each of the exhaust valves are puppet valves of an umbrella shape, and include respective valve portions (umbrella-shaped portions) 3a that close or release the air intake ports 3a and the exhaust ports, and stems (rod-shaped portions) 3b that slide in the cylinder head.

At the pair of stems 3b of the air intake valves 3 that are inserted through respective air intake ports 2 are mounted respective valve springs 4, each of which is biased in a direction so that the valve portion 3a of each of the air intake valves 3 closes respective air intake ports 2.

Above the cylinder head is provided a crosshead 5 having a T shape in side view, for depressing end portions of the pair of stems 3b of the air intake valves 3. The crosshead 5 is guided by a shaft 6 disposed in parallel with a moving direction of each of the air intake valves 3, and is movable up and down in the moving direction of each of the air intake valves 3.

With the above construction, when the crosshead 5 is lowered, the crosshead 5 depresses the end portions of the pair of stems 3b of the air intake valves 3, causing each of the air intake valves 3 to move in a direction of releasing the air intake ports 2 against the biasing force by each of the valve springs 4.

Further, at one arm 5a of the crosshead 5 is provided an adjust screw 7 for adjusting so that the air intake valves 3 and the crosshead 5 are attached firmly. The adjust screw 7 is movable threadably relative to the crosshead 5, to thereby adjust the gap with one of the air intake valves 3.

Above the crosshead 5 (in Fig. 1) is provided a rocker arm 9. The rocker arm 9 is rotatable with a rocker shaft 10 serving as a pivot, and is constructed so that one end portion thereof (left end portion in Fig. 1) forms a depressing portion 9a for depressing the crosshead 5, and the other end portion (right end portion in Fig. 1) forms an actuating portion 9b.

The depressing portion 9a of the rocker arm 9 is arranged at a position where it can depress a right side of approximately center portion of the crosshead 5. When the rocker arm 9 rotates in the counterclockwise direction (in Fig. 1), the depressing portion 9a of the rocker arm 9 depresses the cross head 5, causing the air intake valves 3 to move in a direction of releasing the air intake ports 2, to thereby release the air intake ports 2.

On the other hand, when the rocker arm 9 rotates in the clockwise direction (in Fig. 1), the air intake valves 3 move upward by the biasing force of the valve springs 4, causing the air intake ports 2 to close and the crosshead 5 to move upward.

At the actuating portion 9b of the rocker arm 9 is threadably mounted an adjust screw 11 for adjusting the gap between the depressing portion 9a and the crosshead 5. Hemispherically-shaped one end portion of the adjust screw 11 is accommodated in one end portion of the push rod 13.

The one end portion of the push rod 13 is formed with a hemispherically-shaped concave portion 13a in which the hemispherically-shaped one end portion of the adjust screw 11 can be accommodated.

The push rod 13 is adapted to rotate the rocker arm 9 in the counterclockwise direction (in Fig. 1), and the other end portion 13b of the push rod 13is accommodated in a push rod accommodating portion 14a provided above an arm portion of a tappet arm 14.

Between the actuating portion 9b of the rocker arm 9 and the cylinder head is stretched a return spring 15. The return spring 15 is adapted to bias the rocker arm 9 in the clockwise direction (in Fig. 1), making possible to keep the state where the one end portion of the adjust screw 11 is accommodated in the concave portion 13a of the push rod 13.

Incidentally, all that the return spring 15 is required is to bias the rocker arm 9 in the clockwise direction (in Fig. 1), and therefore, it may be a torsion coil spring that is wound around the rocker shaft 10.

In this case, one end of the coil spring is fixed to the rocker arm 9 and the other end of the coil spring is fixed to the cylinder head.

The tappet arm 14 is rotatably mounted with a tappet shaft 16 serving as a pivot. When the tappet arm 14 rotates in the clockwise direction (in Fig. 1), the tappet arm 14 pushes the push rod 13 upward, causing the rocker arm 9 to rotate in the counterclockwise direction (in Fig. 1).

Below the arm of the tappet arm 14 is rotatably mounted a roller follower 17, and below the roller follower 17 is rotatably provided a cam 18 that is in rotatable contact with the roller follower 17.

The cam 18 rotates in linkage with a crank shaft 82 of the engine, and causes the air intake valves 3 to move via the tappet arm 14, the push rod 13, the rocker arm 9 and the crosshead 5 in a direction of releasing the air intake ports 2 so that the air intake ports 2 can be released.

Thus, the releasing time of the air intake ports 2 and the valve lift amount of the air intake valves 3 are controlled by the outer shape of the cam 18 (cam profile).

In this embodiment, for convenience of explanation, moving of the air intake valves 3 in a direction of releasing the air intake ports 2 is called "releasing move", moving of the air intake valves 3 in a direction of closing the air intake ports 2 is called "closing move", amount corresponding to a distance from a position of the air intake valves 3 when the air intake ports 2 are fully closed to a position of the air intake valves 3 when the air intake ports 2 are opened is called "valve lift amount", the valve lift amount being expressed as a positive value corresponding to this amount, and being expressed as zero (0) when the air intake ports 2 are fully closed.

Above the crosshead 5 is provided the hydraulic actuator 20. In the hydraulic actuator 20, a fore end portion of the rod section 23c of the piston 23 abuts onto the crosshead 5, and is arranged in interlocking with the movement of the crosshead 5.

It is constructed so that, when the hydraulic actuator 20 stops at a prescribed timing, the fore end portion of the rod section 23c of the piston 23 abuts onto the crosshead 5, whereby the air intake valves 3 can keep the released state of the air intake ports 2 at a prescribed degree of opening, regardless of the operations of the aforementioned cam 18, the tappet arm 14, the push rod 13 and the rocker arm 9.

The hydraulic actuator 20 to which this embodiment is applied is of a single acting type, wherein a cylinder section 22 of the hydraulic actuator 20 is formed integrally with a block 21, and a hydraulic control valve 30 for controlling a flow of an operating oil is accommodated and mounted in the block 21 on the opposite side to the cylinder section 22.

The hydraulic control valve 30 is, for example, a two-port solenoid operated valve having an input port 30a and an output port 30b.

The block 21 is formed with a supply/discharge channel 21d that communicates with the output port 30b of the hydraulic control valve 30, and a first channel 21b that communicates with an output port 50a of the accumulator 50.

The first channel 21 b communicates with the input port 30a of the hydraulic control valve 30 and an outflow channel 21 via a second channel 21c.

The cylinder section 22 of the hydraulic actuator 20 is formed with a pressurizing chamber 22a. The pressurizing chamber 22a is so constructed that one end thereof is open so that the piston 23 can be inserted thereinto, allowing the one end to be closed by the piston 23.

The other end of the pressurizing chamber 22a communicates with the output port 30b of the hydraulic control valve 30 via the supply/discharge channel 21d. An oil groove 21b1 is formed in a prescribed portion of the cylinder section 22. The outflow channel 21e that communicates with the second channel 21c is formed at the oil groove 21b1.

The piston 23 includes a piston section 23a and a rod section 23c.

The piston section 23a is a portion that slides inside the pressurizing chamber 22a of the cylinder section 22.

The rod section 23c is a portion that moves outside of the cylinder section 22, and has a taper shape that becomes thinner from the base to the tip.

As described above, the gap sensor 24 that is connected to the controller 90 is provided on the side of the rod section 23c of the piston 23, and the gap sensor 24 measures a gap between the rod section 23c and the gap sensor 24.

The gap sensor 24 is capable of measuring the gap with the rod section 23c by measuring an eddy current, for example. When the rod section 23c advances outside the cylinder section 22, a decrease in the gap is measured, and when the rod section 23c is retracted inside the cylinder section 22, an increase in the gap is measured.

The controller 90 is capable of monitoring the movement of the rod section 23c by monitoring the gap with the rod section 23c measured by the gap sensor 24, and is capable of monitoring the operation (valve lift amount) of the air intake valves 3 from the movement of the rod section 23c that abuts onto the crosshead 5 and is in conjunction with the movement of the crosshead 5.

A concave portion 21 a of the block 21 accommodates the hydraulic control valve 30, which is, as stated above, a two-port solenoid operated valve having the input port 30a and the output port 30b.

The input port 30a of the hydraulic control valve 30 communicates with the second channel 21c of the block 21, and the output port 30b communicates with the supply/discharge channel 21d of the block 21.

Further, inside of the hydraulic control valve 30, there are provided a spool 31 as a valve member and a spool section 34 having a slide surface (not shown in the drawings) along which the spool 31 slides (in arrow directions in Fig. 1), as well as a spring 33 and a solenoid 32.

In the hydraulic control valve 30, the spring 33 pushes the spool 31 so that the spool 31 slides along the slide surface toward a side where the input port 30a and the output port 30b communicates with each other (down-pointing arrow side in Fig. 1, called "release side", for convenience of explanation) in an ordinal state (a state where the solenoid 32 is not excited, called "OFF state", for convenience of explanation). When the solenoid 32 is excited (called "ON state", for convenience of explanation), the spool 31 slides along the slide surface toward a side where the communicating state between the input port 30a and the output port 30b is blocked (up-pointing arrow side in Fig. 1, called "block side" for convenience of explanation).

Incidentally, for convenience of explanation, a state where the spool 31 of the hydraulic control valve 30 is on the block side is called an operating oil block state, and a state other than the operating oil block state is called an operating oil supply/discharge state.

Thus, when the spool 31 of the hydraulic control valve 30 is on the release side, an operating oil is supplied to the supply/discharge channel 21d of the block 21 via the first channel 21b and the second channel 21c formed in the block 21 and the hydraulic control valve 30, and further to the pressurizing chamber 22a.

The operating oil supplied to the pressurizing chamber 22a acts on the piston section 23a of the piston 23 causing the piston 23 to push out of the cylinder section 22, to thereby lower the rod section 23c.

Thereafter, the solenoid 32 of the hydraulic control valve 30 is excited, causing the spool 31 to slide to the block side. In this state, when the rod 23c is pushed up to the side of the cylinder section 22, the piston 23 is pushed into the cylinder portion 22 until the piston section 23a of the piston 23 causes the oil groove 22b1 that communicates with the outflow channel 21e of the block 21
to be closed. Thus, the operating oil is sealed into the pressurizing chamber 22a, and the operation of the piston 23 is blocked by the sealed operating oil, causing the piston 23 to stop.

Thereafter, the solenoid 32 of the hydraulic control valve 30 stops being exited to cause the spool 31 to slide to the release side so that the input port 30a and the output port 30b are in a mutually communicating state again. In this state, when the rod 23c of the piston 23 is pushed up to the side of the cylinder section 22, the piston moves up, to thereby flow the operating oil out through the supply/discharge channel 21d of the block 21.

The hydraulic control valve 30 is connected to the controller 90, and the controller controls an energizing timing and an energizing time period of the hydraulic control valve 30.

Incidentally, the controller 90 can control the hydraulic control valve arbitrarily with an accuracy of millisecond (1/1000sec).

To the first channel 21b of the block 21 is connected an output port 50a of the accumulator 50.

The accumulator 50 serves as a pressure accumulating means that pressure-accumulates an operating oil. In this embodiment, the accumulator 50 is a mechanical accumulator.

The accumulator 50 comprises the abovementioned output port 50a, an output channel 50b extending from the output port 50a, an input channel 50c that intersects with the output channel 50b, and an input port 50d that communicates with the input channel 50c. The input channel 50c is provided with a pressure accumulating section 52.

The hydraulic actuator 20, the hydraulic control valve 30 and the accumulator 50 constitute a hydraulic circuit 60 as shown in Fig. 2 (the hydraulic circuit being enclosed by broken lines). It is possible for a low pressure operating oil to be supplied from a lubricating unit 61 that is adjunct to the engine and supplies a lubricating oil to the engine.

When the engine starts, a low pressure operating oil is supplied from the lubricating unit 61 that is adjunct to the engine, via a check valve 62, to the accumulator 50, the hydraulic control valve 30 and the hydraulic actuator 20 sequentially in this order 62, to thereby fill the operating oil into the hydraulic control valve 30 and the hydraulic actuator 20.

With the operation of the engine, power is transmitted to the cam 18, the tappet arm 14, the push rod 13, the rocker arm 9 and the crosshead 5, sequentially in this order, in linkage with the engine piston 80 and the crank shaft 82. In the air intake process of the engine, the air intake ports 2 are opened or closed by an opening move or a closing move of the air intake valves 3. In the compression process, explosion process and exhaust process of the engine, the air intake ports 2 are closed by a closing move of the air intake valves 3.

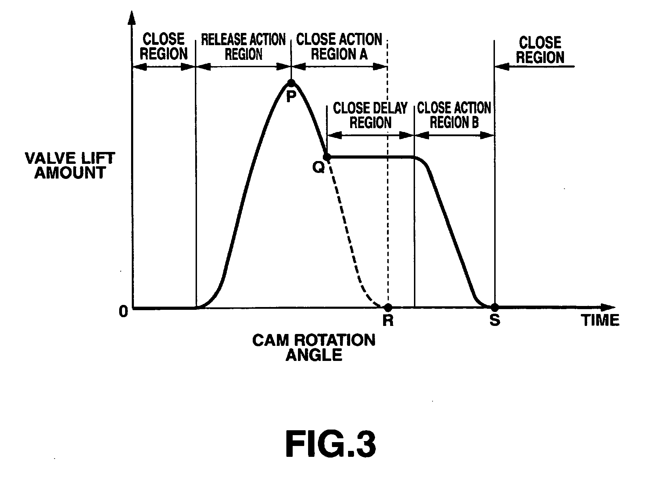

The operation of the variable valve device 1 so constructed as stated above is now described in reference to Fig. 3.

Fig. 3 is a diagram illustrating a relation between a cam rotation angle and a valve lift amount in the air intake process.

In the compression process, explosion process and exhaust process of the engine, the air intake valves 3 cause the air intake ports 2 to be fully closed with the biasing force of the valve springs 4. The relation between the rotation angle of the cam 18 and the valve lift amount in this time is shown in a close region in Fig. 3 in which the valve lift amount of the air intake valves 3 is zero regardless of the rotation angle of the cam 18.

When the air intake process of the engine starts, the air intake ports 2 are released gradually due to the lowering (releasing move) of the air intake valves 3.

The relation between the rotation angle of the cam 18 and the valve lift amount in this time is shown in an release action region in Fig. 3 in which the valve lift amount of the air intake valves 3 increases gradually with an increase in the rotation angle of the cam 18.

As shown in Fig. 3, when the valve lift amount of the air intake valves 3 becomes maximum (at a position of point P in Fig. 3) due to the releasing move of the air intake valves 3, the air intake ports 2 become in a fully opened state. Thereafter, due to the biasing forces of the valve springs 4 of the air intake valves 3 and the return spring 15, the crosshead 5, the rocker arm 9, the push rod 13 and the tappet arm 14 operate followed by the cam 18, to move the air intake valves 3 upward (closing move), to thereby close the air intake ports 2 gradually.

The relation between the rotation angle of the cam 18 and the valve lift amount in this time is shown in a close action region A (a curve starting from the point P to a point R by way of a point Q) in Fig. 3 in which the valve lift amount decreases gradually with an increase in the rotation angle of the cam 18. During this period of time, the rod section 23c of the piston 23 is accommodated gradually inside the cylinder section 22, and the operating oil in the pressurizing chamber 22a of the cylinder portion 22 is accumulated in the accumulator 50.

Thus, the hydraulic actuator 20 has a function of a piston pump so that the operating oil is accumulated in the accumulator 50 via the hydraulic control valve 30 and the hydraulic actuator 20.

As shown in the close action region A in Fig. 3, when the valve lift amount becomes minimum (at a position of point R in Fig. 3), that is, the valve lift amount becomes zero, the air intake valves 3 cause the air intake ports 2 to be in a fully closed state.

In the abovementioned close action region A, when the hydraulic control valve 30 is excited at a prescribed position in the close action region A, the spool 31 of the hydraulic control valve 30 slides along the slide surface toward the block side against the biasing force of the spring 33 of the hydraulic control valve 30, causing the state of the hydraulic control valve 30 to move from the operating oil supply/discharge state to the operating oil block state.

Then, the piston 23 is pushed into the cylinder portion 22 until the piston section 23a of the piston 23 causes the oil groove 22b1 to be closed. Thereafter, the operating oil is sealed into the pressurizing chamber 22a of the cylinder section 22, and the operation of the piston 23 is blocked by the operating oil sealed in the pressurizing chamber 22a, causing the piston 23 to stop.

As a result, the rod section 23c of the stopped piston 23 pushes the crosshead 5, to keep the air intake valves 3 in the open state of the air intake ports 2 with a prescribed degree of opening, causing the timing to close the air intake ports 2 in the air intake process of the engine to be delayed.

When the hydraulic control valve 30 is excited for a prescribed period of time, the air intake ports 2 will be kept in the release state with a constant opening degree during the prescribed period of time where the hydraulic valve controller 30 is being excited.

The relation between the rotation angle of the cam 18 and the valve lift amount at this time is shown in a close delay region in Fig. 3 in which the valve lift amount of the air intake valves 3 keeps constant during a prescribed period of time where the hydraulic control valve 30 is being excited even if the rotation angle of the cam 18 increases.

On the other hand, the rocker arm 9, even in the case where the rod section 23c of the piston that has been stopped pushes the crosshead 5 so that the air intake valves 3 causes the air intake ports 2 to be kept in the release state, is closely contact with the push rod 14 by the biasing force of the return spring 15 so as to be controlled by the outer shape of the cam 18 (cam profile), and operates so that a gap is created between the crosshead 5 and the rocker arm 9 without the push rod 13 dropping off from the rocker arm 9.

When the hydraulic valve controller 30 stops being exited after an elapse of a prescribed time, the spool 31 of the hydraulic valve controller 30 slides along the slide surface to the release side by the biasing force of the spring 33, causing the state of the hydraulic control valve 30 to move from the operating oil block state to the operating oil supply/discharge state.

Then, by the biasing force of the valve springs 4 of the air intake valves 3, the air intake valves 3 causes the air intake ports 2 to close gradually. At this time, the crosshead 5 moves up and pushes the rod section 23c of the piston 23 upward so that the piston 23 is gradually accommodated into the cylinder section 22, causing the operating oil in the pressurizing chamber 22a of the cylinder section 22 is accumulated into the accumulator 50.

The relation between the rotation angle of the cam 18 and the valve lift amount at this time is shown in a close action region B in Fig. 3 in which the valve lift amount of the air intake valves 3 decreases gradually as the rotation angle of the cam 18 increases.

As shown in the close action region B, when the valve lift amount becomes minimum (at a position of point S in Fig. 3), that is, when the valve lift amount becomes zero, the air intake valves 3 causes the air intake ports 2 to fully closed.

As described above, the variable valve device 1 can perform a control for stopping upward movement of the rod section 23c of the piston 23 and closing movement of the air intake valves 3, and for delaying the timing of closing the air intake ports 2 by the air intake valves 3 (which is called "VVA operation control", for convenience of explanation), and, can adjust the amount of air intake suitable for a driving condition of the engine by performing this control in accordance with the driving condition of the engine.

Incidentally, VVA is short for Variable Valve Actuation.

However, there may be a case in which, if the OFF state is being continued in the hydraulic valve controller 30, an oil film formed on the slide surface of the spool section 34 of the hydraulic valve controller 30 will run short, making an initial operation of the hydraulic valve controller 30 unstable.

Specifically, if an oil film formed on the slide surface of the spool section 34 runs short when the hydraulic valve controller 30 performs the first on/off operation after the OFF state is being continued in the hydraulic valve controller 30, there may be a case in which the spool 31 cannot move smoothly, causing a return (sliding toward the release side) of the spool 31 to be slow.

Fig. 4 is an explanatory diagram illustrating an example of measurement signals measured by each of the sensors and a command signal output to a hydraulic control valve in connection with the aforementioned operation of the variable valve device 1.

Incidentally, Fig. 4(a) is a diagram illustrating an example of a TDC detection sensor signal 100 measured by the TDC detection sensor 70; Fig. 4(b) is a diagram illustrating an example of a rotation speed detection signal 110 measured by the crank angle detection sensor 72; Fig. 4(c) is a diagram illustrating an example of a VVA start signal 120 generated by and output from the controller 90; and Fig. 4(d) is a diagram illustrating an example of a valve lift amount signal 130 measured by the gap sensor 24.

Control of the variable valve device 1 is performed by the controller 90 on the basis of the measurement signals of various types measured by the various sensors of the variable valve device 1. When the controller 90 performs the VVA operation control, the controller 90 monitors the TDC detection sensor signal 100 (see Fig. 4(a)), the rotation speed detection signal 110 output from the crank angle detection sensor 72 (see Fig. 4(b)), etc., and, if the TDC detection sensor signal 100 is detected, performs a control to determine a timing for performing a VVA operation control of a cylinder at which the TDC detection sensor signal 100 is detected by calculating an engine rotation speed based on the rotation speed detection signal 110 and by counting the number of pulses in the rotation speed detection signal 110.

The movement of the air intake valves 3 in this period of time is measured by the gap sensor 24 as the close region and the release action region of the valve lift amount signal 130.

Incidentally, the TDC detection sensor signal 100 is a measurement signal output from the TDC detection sensor 70 when the engine piston 80 for each cylinder of the engine is positioned at the top dead center in the air intake process.

When the number of pulses in the rotation speed detection signal 110 arrives at a prescribed number of pulses (which is called "VVA start set pulse", for convenience of explanation) 111 (see Fig. 4(b)), the controller 90 judges as arriving at an output timing (which is called "excitation instruction timing (Pcom)", for convenience of explanation) for outputting a command signal (which is called "VVA start signal", for convenience of explanation) 120 for exciting the hydraulic control valve 30, generates the WA start signal 120 and outputs the VVA start signal to the hydraulic control valve 30, causing the hydraulic control valve 30b to be excited.

Incidentally, the WA start set pulse 111 is set so that the counted number of pulses in the rotation speed detection signal 110 can arrive at the WA start set pulse 111 during the closing movement of the air intake valves 3.

When the VVA start signal 120 is output to the hydraulic control valve 30, an excitation current corresponding to a voltage Vc of the VVA start signal 120 is output to the solenoid 32 of the hydraulic control valve 30 to excite the hydraulic control valve 30 during a period of time where the VVA start signal 120 is set to be ON, causing the spool 31 of the hydraulic control valve 30 to slide to the block side and to be kept at the block side. During a period of time where the VVA start signal 120 is set to be OFF, the output of the excitation current to the hydraulic control valve 30 is stopped so that the hydraulic control valve 30 stops being excited, causing the spool 31 to slide to the release side and to be kept at the release side.

Thus, the hydraulic control valve 30 is excited by the VVA start signal 120 for a prescribed constant period of time (which is called "WA keep time", for convenience of explanation) TW from the excitation instruction timing (Pcom), causing the spool 31 to be kept at the block side for the VVA keep time TW

When the spool 31 of the hydraulic control valve 30 slides to the block side, the hydraulic control valve 30 moves from the operating oil supply/discharge state to the operating oil block state, the operating oil in the pressurizing chamber 22a of the cylinder section 22 is sealed, to thereby stop the rod section 23c of the piston 23. Thus, during the VVA keep time TW where the hydraulic valve controller 30 is being excited, the rod section 23c stops, to thereby prevent the air intake valves 3 from closing movement so that the air intake ports 2 are kept in the release state, causing the closing timing of the air intake ports 2 to be delayed.

The operation of the air intake valves 3 during this period is measured as a close delay region (a solid line portion) of the valve lift amount signal 130 (see Fig. 4(d)).

On the other hand, during a period where the WA operation control is not performed, after the operations corresponding to the close region and the release action region of the valve lift amount signal 130, due to the biasing force of the valve springs 4 of the air intake valves 3 and the return spring 15, the crosshead 5, the rocker arm 9, the push rod 13 and the tappet arm 14 operate followed by the cam 18, to move the air intake valves 3 upward (closing move), to thereby close the air intake ports 2 gradually. Thus, the operation of the air intake valves 3 during this period is measured as a close action region A (a curve from point P to point R via point Q) of the valve lift amount signal 130 (see Fig. 4(d)).

After the WA start signal 120 is set to be ON, when the WA keep time TW elapsed and the VVA start signal 120 is set to be OFF, the hydraulic valve controller 30 stops being excited.

Then, the hydraulic valve controller 30 moves from the operating oil block state to the operating oil supply/discharge state, causing the piston 23 to be movable. Thus, due to the biasing force of the valve springs 4, the air intake valves 3 resume closing movement, to gradually close the air intake ports 2, causing the air intake ports 2 to be fully closed eventually.

The operation of the air intake valves 3 during this period is measured as a close action region B of the valve lift amount signal 130 (see Fig. 4(d)).

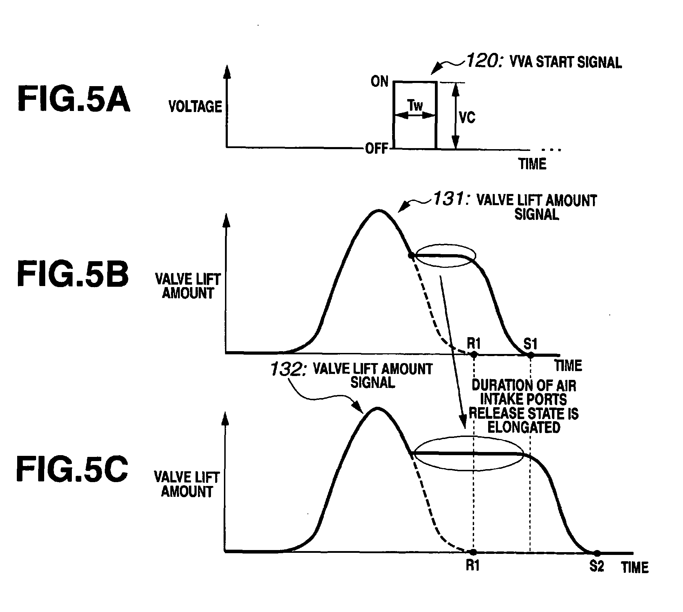

Fig. 5 is an explanatory diagram illustrating a delay in the closing timing of the air intake valves 3 due to a slow movement in return of the spool 31.

Incidentally, Fig. 5(a) is a diagram illustrating an example of the WA start signal 120; Fig. 5(b) is a diagram illustrating an example of the valve lift amount signal 131 when there is no slow movement in returning the spool 31; and Fig. 5(c) is a diagram illustrating an example of the valve lift amount signal 132 when the return of the spool 31 is slow.

In the case where an oil film is formed on the slide surface of the spool section 34 when the spool 31 slides to the release side after the block side, the spool 31 slides on the slide surface smoothly. Therefore, even though the spool 31 slides from the release side to the block side and further slides to the release side, slow movement will not occur during the return of the spool 31. Thus, the air intake valves 3 operate as shown by the valve lift amount signal 131 (see solid line portion in Fig. 5(b)), and the end of closing the air intake valves 3 is positioned at a prescribed timing S1.

On the other hand, in the case where an oil film is short on the slide surface of the spool section 34, there is occasionally a state where the spool 31 does not slide on the slide surface smoothly. In such a state, when the spool 31 slides from the release side to the block side and then further slides to the release side, slow movement might occur due to a long time required for the return of the spool 31.

In this case, the air intake valves 3 operate in such a manner as shown by the valve lift amount signal 132 (see solid line portion in Fig. 5(c)), and the end of closing the air intake valves 3 is positioned at a timing S2 that is delayed greatly from the prescribed timing S 1.

Therefore, the controller 90 of the variable valve device 1 performs a control (which is called "control valve stabilizing control", for convenience of explanation) for operating only the spool 31 of the hydraulic control valve 30 at a timing not affecting the operation of the air intake valves 3 to prevent the oil film in the spool section 34 from being short.

The control valve stabilizing control according to the present invention will now be described in reference to Figs. 6 through 10.

Incidentally, Fig. 6 is a flowchart illustrating a control procedure of the WA operation control; Fig. 7 is a flowchart illustrating a control procedure of the control valve stabilizing control according to the present invention; and Figs. 8 through 10 illustrate an example of each of the measurement signals in the VVA operation control and the control valve stabilizing control.

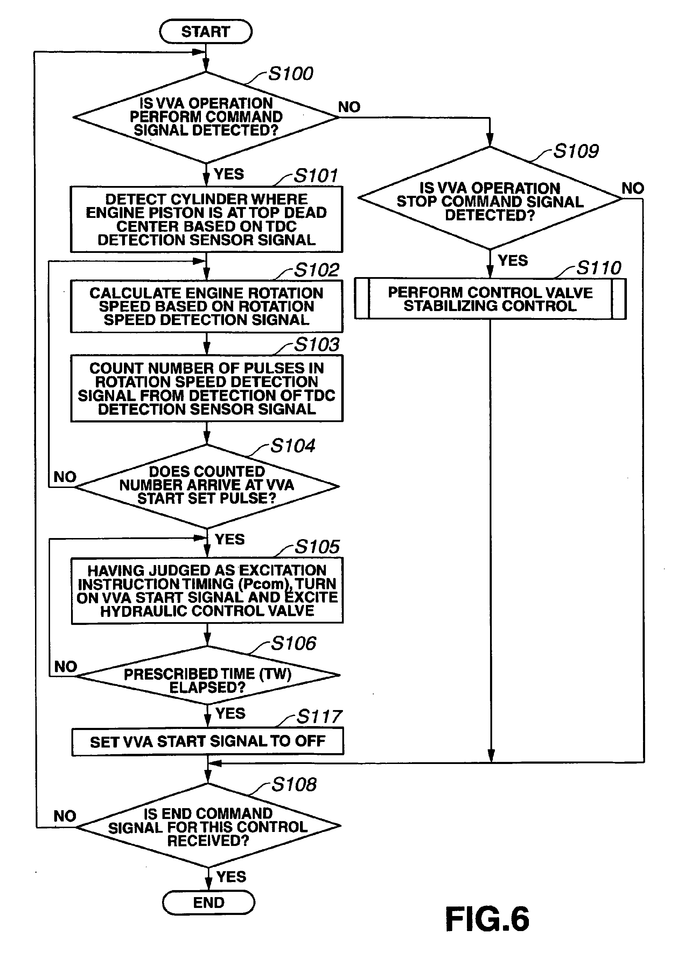

Referring to Fig. 6, the controller 90 detects whether a WA operation perform command signal or a WA operation stop command signal is received or not, and the VVA operation control is performed if the VVA operation perform command signal is detected (YES in S100), and the control valve stabilizing control is performed (S110) if the WA operation stop command signal is detected (NO in S100 and YES in S109).

It can be constructed here so that the VVA operation perform command signal and the VVA operation stop command signal may be output from, for example, a supervising control device (not shown in the drawings) for controlling an entirety of the vehicle, and may be output corresponding to on or off of a VVA operation instruction switch not shown, or may be output automatically according to an output state of the engine based on an engine output map not shown for controlling the output state of the engine. Incidentally, when the engine operates at a low rotation speed after the start of the engine, it is designed so that the VVA operation stop command signal is being output for a certain fixed period of time.

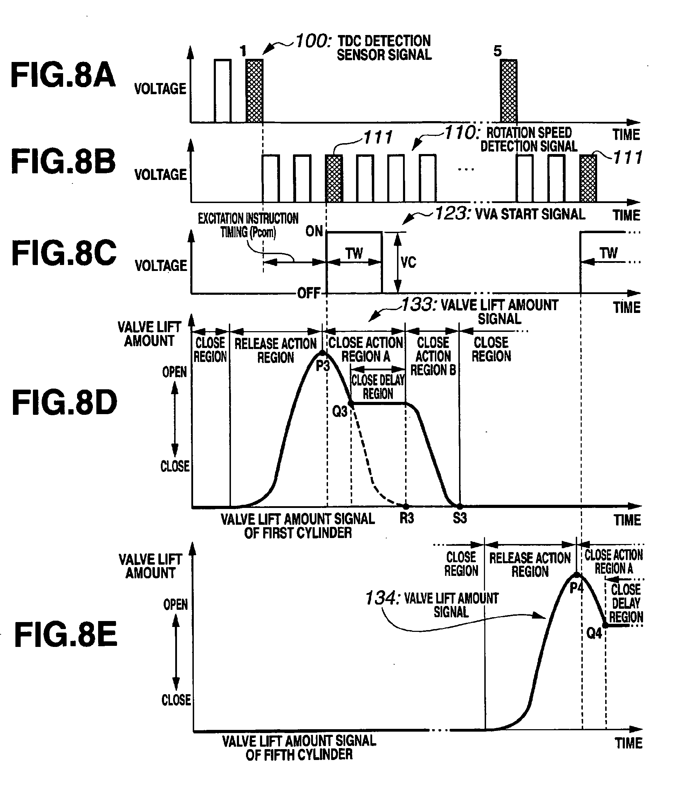

Specifically, in the VVA operation control that is performed when the VVA operation perform command signal is detected, a TDC detection sensor signal 100 output from the TDC detection sensor 70 (see Fig. 8(a)), a rotation speed detection signal 110 output from the crank angle detection sensor 72 (see Fig. 8(b)), etc. are monitored, and, when the TDC detection sensor signal 100 is detected (YES in S100, S101), the rotation speed of the engine is calculated based on the rotation speed detection signal 110 and the number of pulses in the rotation speed detection signal 110 starts being counted, so that an output timing (an excitation instruction timing (Pcom)) at which a command signal (WA start signal) for exciting the hydraulic control valve 30 is to be output is determined (S102, S103).
When the counted number of pulses arrives at a prescribed number of pulses (WA start set pulse) 111 (YES in S104), it is judged as arriving at the excitation instruction timing (Pcom), and a VVA start signal 123 is generated (see Fig. 8(c)) and is output to the hydraulic control valve 30 in a hydraulic circuit corresponding to a cylinder where the TDC detection sensor signal 100 is detected (S105). This hydraulic control valve 30 is excited from a time point of the excitation instruction timing (Pcom) during the VVA keep time TW by an excitation current that is output in accordance with the output voltage Vc of the VVA start signal 123.

When the hydraulic control valve 30 is excited, the operating oil in the pressurizing chamber 22a of the cylinder section 22 is sealed, upward movement of the rod section 23c of the piston 23 and closing movement of the air intake valves 3 are stopped, causing the release state of the air intake ports to continue at a prescribed degree of opening as described above.

The operation of the air intake valves 3 during this period is measured as a close delay region of the valve lift amount signal 133 (see Fig. 8(d)).

Incidentally, in S 104, when the counted number of pulses does not arrive at the VVA start set pulse 111 (NO in S104), operation is awaited until it arrives at the VVA start set pulse 111 without outputting the VVA start signal 123.

Next, after the VVA keep time TW elapsed (YES in S106), when the VVA start signal 123 is set to be OFF (S107), the excitation current stops its output to the hydraulic control valve 30 so that the hydraulic control valve 30 stops being excited to move from the operating oil close state to the operating oil supply/discharge state, and the air intake valves 3 resume closing movement, causing the air intake ports 2 to be gradually closed and to be fully closed eventually.

The operation of the air intake valves 3 during this period is measured as a close action region B of the valve lift amount signal 133 (see Fig. 8(d)).

The VVA operation control is performed in the same manner as described above repeatedly for each cylinder after the VVA start signal 123 is set to be OFF until an end command for the present control is detected (NO on S108).

More specifically, a VVA operation control for each cylinder is performed repeatedly by outputting a VVA start signal same as the VVA start signal 123 to a hydraulic control valve 30 provided corresponding to each cylinder at an output timing (an excitation instruction timing (Pcom)) same as in the VVA start signal 123.

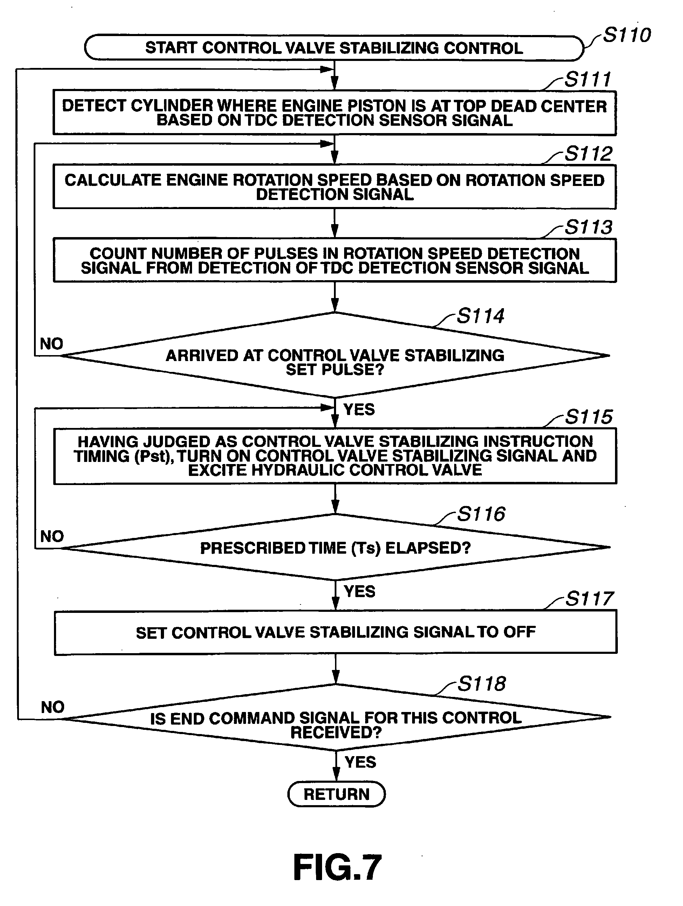

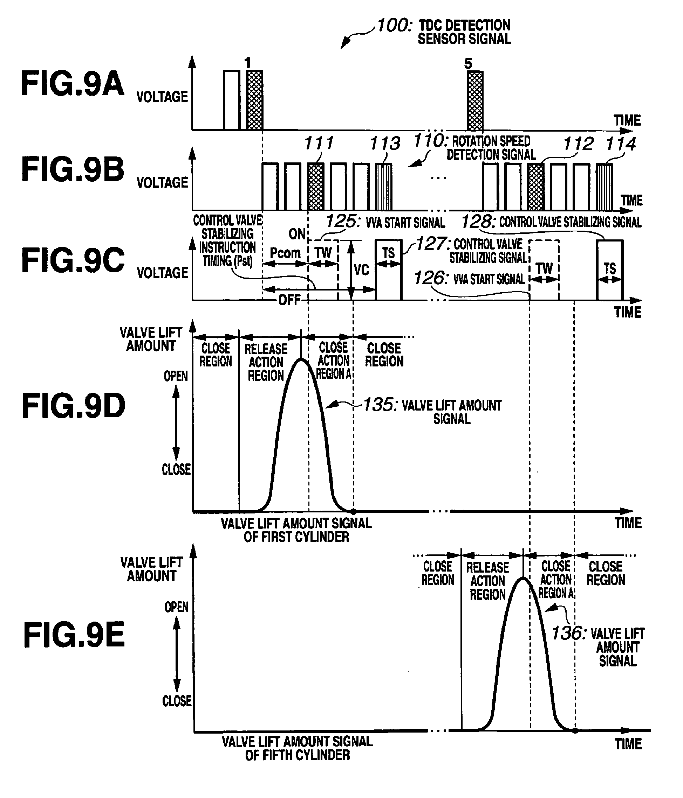

Further, specifically, in the control valve stabilizing control that is performed when the VVA operation stop command signal is detected (NO in S 100 and YES in S109), as shown in Fig. 7, the TDC detection sensor signal 100 output from the TDC detection sensor 70 (see Fig. 9(a)), the rotation speed detection signal 110 output from the crank angle detection sensor 72 (see Fig. 9(b)), etc. are monitored, and, when the TDC detection sensor signal 100 is detected (S111), the rotation speed of the engine is calculated based on the rotation speed detection signal 110, and the number of pulses in the rotation speed detection signal 110 starts being counted, so that an output timing (a control valve stabilization instruction timing (Pst) of a command signal (a control valve stabilizing instruction signal) for stabilizing the operation of the hydraulic control valve 30 is determined (S112, S113).

When the counted number of pulses arrives at a prescribed number of pulses (a control valve stabilizing set pulse) 113 (YES in S114), it is judged as an arrival at the aforementioned control valve stabilizing instruction timing (Pst), and a control valve stabilizing signal 127 (see Fig. 9(c)) is generated and is output to the hydraulic control valve 30 in a hydraulic circuit corresponding to a cylinder where the TDC detection sensor signal 100 is detected (S 115).
On the other hand, the hydraulic control valve 30 is excited from a time point of the control valve stabilizing instruction timing (Pst) (or a crank angle) during a control valve stabilizing keep time Ts by an excitation current that is output corresponding to the control valve stabilizing signal 127.

The control valve stabilizing keep time Ts is set in accordance of the rotation speed of the engine in such a manner as to be longer as the rotation speed of the engine becomes slower so that the spool 31 moves reliably, to thereby form an oil film on the slide surface of the spool section 34.

Incidentally, in Fig. 9(c), a VVA start signal 125 (see a broken line portion) shows a waveform of the VVA start signal that is generated and its output timing (excitation instruction timing (Pcom)) when the VVA operation control is performed.

The control valve stabilizing signal 127 is a control signal for exciting the hydraulic control valve 30 at a timing not affecting the operation of the air intake valves 3 to thereby operate only the spool 31 of the hydraulic control valve 30 so that an oil film shortage on the slide surface of the spool section 34 of the hydraulic control valve 30 will not occur.

Incidentally, the timing not affecting the operation of the air intake valves 3 is preferably during a period where the air intake valves 3 are fully closed (close region).

Returning of the spool 31 to the release side after moving to the block side forms an oil film on the slide surface of the spool section 34 and therefore prevents the oil shortage in the spool section 34.

Incidentally, when the counted number of pulses does not arrive at the control valve stabilizing start set pulse 113 in S 114 (NO in S 114), an operation is awaited until the number of pulses in the rotation speed detection signal 110 arrives at the control valve stabilizing start set pulse 113 without outputting the control valve stabilizing signal 127.

When the control valve stabilizing signal 127 is set to be OFF (S 117) after the elapse of the control valve stabilizing keep time Ts (YES in S 116), the control valve stabilizing control is performed in the same manner as described above repeatedly for each cylinder until an end command for the present control is detected (NO on S 118).

More specifically, supposing that the engine is provided with six cylinders, and the TDC detection sensor signal 100 is detected in the order of the first cylinder, the fifth cylinder, the third cylinder, the sixth cylinder, the second cylinder and the fourth cylinder corresponding to the firing order of each of the cylinders, the TDC detection sensor signal 100 is detected in the fifth cylinder after the control valve stabilizing control is performed for the first cylinder, and the rotation speed of the engine is calculated based on the rotation speed detection signal 110.

Then, when the counted number of pulses arrives at a control valve stabilizing set pulse 114 (see Fig. 9(b)), a control valve stabilizing signal 128 (see Fig. 9(c)) is generated and is output to the hydraulic control valve 30 of the fifth cylinder, only the spool 31 of the hydraulic control valve 30 is operated by exciting the hydraulic control valve 30 during the control valve stabilizing keep time Ts, and the control valve stabilizing control is performed for the fifth cylinder.

After the control valve stabilizing control for the fifth cylinder is performed, the control valve stabilizing control same as described above is repeatedly performed for the third cylinder, the sixth cylinder, the second cylinder and the fourth cylinder in this order.

By performing the control valve stabilizing control sequentially for each of the cylinders of the engine in the order corresponding to the firing order of each of the cylinders, the oil shortage in the respective spool section 34 of the hydraulic control valve 30 provided corresponding to each of the cylinders can be prevented.

Further, this prevention of the oil shortage in the respective spool section 34 of the hydraulic control valve 30 can prevent a variation in the closing timing of the air intake valves 3 due to the slow movement in the return of the spool 31 at an initial operation after continuing OFF state of each hydraulic control valve 30.

Although the above description has shown an example in which the VVA operation control and the control valve stabilizing control are performed at a timing that is determined based on the detection result of the VVA operation perform command signal or the VVA operation stop command signal, each of these controls may be performed at a timing as shown below.

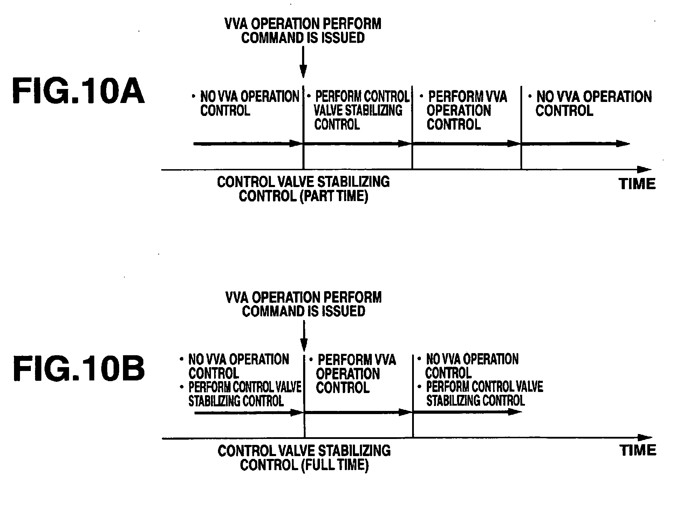

Fig. 10 is a diagram illustrating an example of controlling a timing at which the VVA operation control and the control valve stabilizing control are performed, in which Fig. 10(a) is a diagram illustrating an example of a control valve stabilizing control (part time) for performing the control valve stabilizing control before the VVA operation control is performed based on the VVA operation perform command, and Fig. 10(b) is a diagram illustrating an example a control valve stabilizing control (full time) for performing the control valve stabilizing control except during a period where the VVA operation control is being performed.

As shown in Fig. 10(a), the control valve stabilizing control (part time) is a control method in which, when the VVA operation perform command is issued, the VVA operation control is performed after the control valve stabilizing control is performed.

Specifically, it is a control method in which such a series of control is repeatedly performed for each of the cylinders, that the control valve stabilizing control is performed according to the procedure stated above (see Fig. 7) prior to the VVA operation control when the VVA operation perform command signal is detected in the state where the VVA operation control is not performed, and thereafter, the VVA operation control is performed according to the procedure stated above (see Fig. 6).

Also, As shown in Fig. 10(b), the control valve stabilizing control (full time) is a control method in which the control valve stabilizing control is performed except during a period where the VVA operation control is being performed, and the VVA operation control is performed immediately when the VVA operation perform command signal is detected.

Specifically, it is a control method in which such a control is repeatedly performed for each of the cylinders, that the control valve stabilizing control is performed according to the procedure stated above (see Fig. 7) in a state where the VVA operation is not performed arbitrarily at a timing not affecting the operation of the air intake valves 3, and the VVA operation control is performed according to the procedure stated above (see Fig. 6) immediately when the VVA operation perform command signal is detected.

### (Industrial Applicability)

As described above, the variable valve device according to the present invention is useful for an engine valve device in which the operation of the engine valve is variable, and is particularly applicable to the technique for the engine valve of a diesel engine.

### BRIEF DESCRIPTION OF THE DRAWINGS

Fig. 1 is a schematic diagram illustrating a variable valve device 1 according to the present invention;
Fig. 2 is a diagram illustrating an example of a hydraulic circuit 60;
Fig. 3 is a diagram illustrating a relation between a cam rotation angle and a valve lift amount in the air intake process;
Fig. 4 is an explanatory diagram illustrating an example of measurement signals measured by each of the sensors and a command signal output to a hydraulic control valve in connection with the operation of the variable valve device 1;
Fig. 5 is an explanatory diagram illustrating a delay in the closing timing of the air intake valves 3 due to a slow movement in return of the spool 31;
Fig. 6 is a flowchart illustrating a control procedure of the VVA operation control;
Fig. 7 is a flowchart illustrating a control procedure of the control valve stabilizing control according to the present invention;
Fig. 8 is an explanatory diagram illustrating an example of each of the measurement signals in the VVA operation control;
Fig. 9 is an explanatory diagram illustrating an example of each of the measurement signals in the control valve stabilizing control; and
Fig. 10 is a diagram illustrating an example of controlling a timing at which the VVA operation control and the control valve stabilizing control are performed.

## Claims

1. A variable valve device comprising:
a valve actuation mechanism for moving an air intake valve of an engine to open or close an air intake port;
a hydraulic actuator provided with a piston rod section for preventing the air intake valve from moving;
a hydraulic control valve for controlling an operating oil supplied to or discharged from the hydraulic actuator, the hydraulic control valve having a spool and a slide surface on which the spool slides, the spool being configured so as to move between a prevented position at which the moving of the piston rod section of the hydraulic actuator is prevented and a released position at which the moving of the piston rod section is not prevented;
valve stabilizing control means for performing a control valve stabilizing control for sliding the spool of the hydraulic control valve during a period where the valve actuation mechanism causes the air intake valve to fully close the air intake port; and
variable valve control means for performing a variable valve control for sliding, while the air intake valve is being engaged in closing movement, the spool to the prevented side to prevent the moving of the piston rod section, stopping the closing movement of the air intake valve to thereby change a timing at which the air intake port is fully closed.

2. The variable valve device according to claim 1 **characterized in that** the valve stabilizing control means sets a period of time during which the spool is kept on the prevented side in accordance with a rotation speed of the engine so that the period of time becomes longer as the rotation speed of the engine becomes lower.

3. The variable valve device according to claim 1 or 2 **characterized in that** the valve stabilizing control means sequentially performs the control valve stabilizing control for cylinders of the engine in an order corresponding to a firing order of the cylinders.

4. The variable valve device according to any one of claims 1 through 3 **characterized in that**
the variable valve device further comprises control means for performing the variable valve control and the control valve stabilizing control in combination,
wherein the control means allows the valve stabilizing control means to perform the control valve stabilizing control during a period where the variable valve control is not performed.

5. The variable valve device according to any one of claims 1 through 3 **characterized in that**
the variable valve device further comprises control means for performing the variable valve control and the control valve stabilizing control in combination,
wherein the control means, in performing the variable valve control, allows the variable valve control means to perform the variable valve control after the valve stabilizing control means performs the control valve stabilizing control.

6. A method of controlling a variable valve device, wherein
an air intake valve of an engine is moved by the valve actuation mechanism to open or close an air intake port;
the moving of the air intake valve is prevented by a piston rod section of a hydraulic actuator;
a valve member of the hydraulic control valve for controlling an opeation oil to be supplied to or discharged from the hydraulic actuator is caused to move between a prevented position at which the moving of the piston rod section of the hydraulic actuator is prevented and a released position at which the moving of the piston rod section is not prevented, so as to control an operation of the piston rod section of the hydraulic actuator, to thereby change a timing at which the air intake port is fully closed, **characterized in that**
the method comprises:
performing a control valve stabilizing control for sliding the spool of the hydraulic control valve between the released position and the prevented position during a period where the valve actuation mechanism causes the air intake valve to fully close the air intake port; and
performing a variable valve control for sliding, while the air intake valve is being engaged in closing movement, the spool of the hydraulic control valve to the prevented side to prevent the moving of the piston rod section of the piston, stopping the closing movement of the air intake valve, to thereby change a timing at which the air intake port is fully closed.

7. The method of controlling a variable valve device according to claim 6 **characterized in that** the control valve stabilizing control sets a period of time during which the spool is kept on the prevented side in accordance with a rotation speed of the engine so that the period of time becomes longer as the rotation speed of the engine becomes lower.

8. The method of controlling a variable valve device according to claim 6 or 7 **characterized in that** the control valve stabilizing control is sequentially performed for cylinders of the engine in an order corresponding to a firing order of the cylinders.

9. The method of controlling a variable valve device according to any one of claims 6 through 8 **characterized in that**
the variable valve control and the control valve stabilizing control are performed in combination, and
the control valve stabilizing control is performed during a period where the variable valve control is not performed.

10. The method of controlling a variable valve device according to any one of claims 6 through 8 **characterized in that**
the variable valve control and the control valve stabilizing control are performed in combination, and
in performing the variable valve control, the variable valve control is performed after the control valve stabilizing control is performed.
